# EUROPEAN PATENT APPLICATION

(11) **EP 1 669 890 A1**
(43) Date of publication of application: **14.06.2006**
(21) Application number: 04788169.3
(22) Date of filing: 27.09.2004
(51) Int. Cl.: G06F 17/30

(54) **ELECTRONIC IMAGE ACCUMULATION METHOD, ELECTRONIC IMAGE ACCUMULATION DEVICE, AND ELECTRONIC IMAGE ACCUMULATION SYSTEM**

(30) Priority: 26.09.2003 JP 2003334528
(71) Applicant: NIKON CORPORATION, Tokyo 100-8331 (JP); Nikon Technologies, Inc., Tokyo 142-0043 (JP)
(72) Inventor: NOMOTO, Tetsushi, Nikon Corporation (IP Dept.), Tokyo 100-8331 (JP)
(74) Representative: Walaski, Jan Filip
(86) International application number: PCT/JP2004/014073
(87) International publication number: WO 2005/031612

(57) **Abstract**

An electronic image filing method includes a face image registration phase and an image arranging phase. The face image registration phase contains steps of: inputting a registration image; determining a characteristic quantity for a face in a face image contained in the registration image; and storing the characteristic quantity as a registered face image. The image arranging phase contains steps of: inputting a arranging target image; determining a characteristic quantity of a face in a face image in the arranging target image; detecting a registered face image among registered face images with a characteristic quantity matching the characteristic quantity of the face in the arranging target image having been determined; and correlating the arranging target image with the registered face image having been detected.

## Description

### TECHNICAL FIELD

The present invention relates to an electronic image sorting device and an electronic image sorting system, and it also relates to an electronic image filing device and an electronic image filing system featuring the electronic image sorting device and the electronic image sorting system. More specifically, it relates to a device and a system with which electronic images are sorted and filed, each based upon a person photographed therein.

### BACKGROUND ART

Image data of photographed images are filed and saved for later use in a personal computer (PC) with an image management software program installed therein or a dedicated image filing device in a computer system specifically used for image storage. The image data are arranged and saved in a manner that facilitates subsequent retrieval. For instance, the photographing date or the name of the event photographed is stored as a search key in correlation to each set of image data. The date on which each image is photographed can be automatically attached to the image in a digital camera. Any image data needed for subsequent use can easily be retrieved through a computer search executed by using the search key. A date on which specific image data are accessed to print out the image, edit the image or transmit the image is also automatically stored in relation to the image data to be used as the search key.

There is a face recognition system known in the related art that references a database having stored in advance a characteristic quantity indicating the facial characteristics of a given person and an attribute of the person and identifies the person based upon the characteristic quantity of facial characteristics of a person in an electronic image newly captured by a video camera or the like or in an image obtained by reproducing a recorded electronic image.

### DISCLOSURE OF THE INVENTION

### PROBLEMS TO BE SOLD BY THE INVENTION

While a search key can easily be attached to a given set of image data by using date/time data such as the photographing date/time, which can be automatically attached in the digital camera used to photograph the image or in a device that handles the image data to print out the image, edit the image or transmit the image, the name of the photographed event or the like needs to be entered manually. Since this entry operation is a time-consuming, laborious process, the image data are often stored and filed without appropriate search keys.

While the date/time data can be attached to the image data with ease, they do not have a direct connection to the photographed contents and are often not very relevant. For this reason, the date/time data do not always constitute an effective search key.

A person photographed in an image is usually the search target and thus, the identity of the person can be used as a crucial search key for subsequent image search. However, for the reason discussed above, the name of the photographed person is not usually entered as a search key.

The present invention provides an image filing method, an image filing device and an image filing system with which an attribute of a subject photographed in an image, e.g., the name of the person, can be automatically attached to the image to enable automatic sorting and arranging of the image.

### MEANS FOR SOLVING THE PROBLEM

According to the 1st aspect of the invention, an electronic image filing method, comprises: a face image registration phase; and an image arranging phase, and: the face image registration phase comprises steps of: inputting a registration image; determining a characteristic quantity for a face in a face image contained in the registration image; and storing the characteristic quantity as a registered face image, and the image arranging phase comprises steps of: inputting a arranging target image; determining a characteristic quantity of a face in a face image in the arranging target image; detecting a registered face image among registered face images with a characteristic quantity matching the characteristic quantity of the face in the arranging target image having been determined; and correlating the arranging target image with the registered face image having been detected.
According to the 2nd aspect of the invention, in the electronic image filing method according to the 1st aspect, it is preferred that in the step of storing the characteristic quantity as a registered face image, the characteristic quantity and the face image in the registration image are stored as the registered face image.
According to the 3rd aspect of the invention, in the electronic image filing method according to the 1st or the 2nd aspect, it is preferred that in the step of correlating the arranging target image with the registered face image having been detected, the characteristic quantity of the detected registered face image is appended to the arranging target image.
According to the 4th aspect of the invention, in the electronic image filing method according to the 1st or the 2nd aspect, it is preferred that the face image registration phase further comprises steps of having attribute information related to a person corresponding to the registered face image input, and storing the input attribute information in correlation with the registered face image.
According to the 5th aspect of the invention, in the electronic image filing method according to the 4th aspect, it is preferred that in the step of correlating the arranging target image with the detected registered face image, the attribute information corresponding to the detected registered face image is appended to the arranging target image.
According to the 6th aspect of the invention, in the electronic image filing method according to the 1st or the 2nd aspect, it is preferred that: the face image registration phase further comprises a step of creating an image saving folder in correspondence to the registered face image; and in the step of correlating the arranging target image with the detected registered face image, the arranging target image is stored into the image saving folder corresponding to the detected registered face image.
According to the 7th aspect of the invention, in the electronic image filing method according to the 6th aspect, it is preferred that the face image registration phase further comprises a step of correlating the characteristic quantity of the registered face image with the image saving folder.
According to the 8th aspect of the invention, in the electronic image filing method according to the 6th aspect, it is preferred that the face image registration phase further comprises steps of having attribute information related to a person corresponding to the registered face image input, and correlating at least part of the attribute information with the image saving folder.
According to the 9th aspect of the invention, in the electronic image filing method according to the 6th aspect, it is preferred that there is further provided a step of storing the arranging target image into an unregistered face image folder prepared in advance if no registered face image with a characteristic quantity matching the characteristic quantity having been determined is detected among the registered face images.
According to the 10th aspect of the invention, in the electronic image filing method according to any of the 1st through 9th aspects, it is preferred that: the image arranging phase further comprises a step of obtaining position information indicating a position of a face in the arranging target image; and in the step of storing the arranging target image in the image saving folder or in the unregistered face image folder, the position information indicating the position of the face having been obtained is stored in correlation to the arranging target image.
According to the 11th aspect of the invention, in the electronic image filing method according to the 6th aspect, it is preferred that there is further provided a step of storing the arranging target image into a no-face image folder created in advance if no face image is detected in the arranging target image.
According to the 12th aspect of the invention, in the electronic image filing method according to the 1st or the 2nd aspect, it is preferred that there is further provided an image search phase, and the image search phase comprises steps of: inputting at an image input unit a search image containing a face image to be used for detection; determining a characteristic quantity of the face image in the search image; and detecting an image among arranging target images, which contains a face image with a characteristic quantity matching the characteristic quantity having been determined.
According to the 13th aspect of the invention, in the electronic image filing method according to the 12th aspect, it is preferred that there is further provided a step of detecting an image containing a face image with a characteristic quantity matching the characteristic quantity having been determined in the unregistered face image folder.
According to the 14th aspect of the invention, in the electronic image filing method according to the 12th or the 13th aspect, it is preferred that there is further provided a step of displaying the detected image, and a specific display is brought up in the displayed image at the position indicated in the position information.
According to the 15th aspect, a program enables a computer to execute a method according to any of the 1st through the 14th aspects.
According to the 16th aspect of the invention, an electronic image filing device comprises: an image input unit; a face recognition unit; and an image filing unit, and: a registration image and an arranging target image are input to the image input unit; the face recognition unit includes an image processing unit that detects a face image contained in each of the images input to the image input unit and determines a characteristic quantity in correspondence to the face image and a first storage unit at which the face image and the corresponding characteristic quantity are stored in correlation with each other as a registered face image; the image filing unit includes a second storage unit; and the second storage unit contains an image file folder in which the arranging target image is stored, and stores the arranging target image in an image filing folder corresponding to a registered face image with a characteristic quantity matching the characteristic quantity of the face image in the arranging target image determined by the image processing unit.
According to the 17th aspect of the invention, in the electronic image filing device according to the 16th aspect, it is preferred that the first storage unit and the second storage unit are integrated in a single storage unit.
According to the 18th aspect of the invention, in the electronic image filing device according to the 16th aspect, it is preferred that: there is further provided an image search unit; a search image is also input to the image input unit; and the image search unit extracts an arranging target image stored in an image file folder corresponding to a registered face image with a characteristic quantity matching a characteristic quantity of a face image in the search image determined by the image processing unit.
According to the 19th aspect of the invention, in the electronic image filing device according to the 16th aspect, it is preferred that: there is further provided an image search unit; a search image is also input to the image input unit; and the image search unit extracts an arranging target image in an unregistered face image folder, which contains a face image with a characteristic quantity matching a characteristic quantity of a face image in the search image determined by the image processing unit.
According to the 20th aspect of the invention, an image capturing device comprises: an image input unit that includes a photographing means; a face recognition unit; and a storage unit at which a registered face image and an arranging target image are stored, and: an image photographed by the image photographing means is input as an arranging target image into the image input unit; the storage unit includes a first storage unit at which a characteristic quantity of the registered face image is stored and a second storage at which the arranging target image is stored; the face recognition unit includes an image processing unit that detects a face image in the arranging target image and determines a characteristic quantity of the face image and an image comparison unit that detects a registered face image with a characteristic quantity matching the characteristic quantity of the face image in the arranging target image determined by the image processing unit; and the second storage unit stores the arranging target image in correlation to the characteristic quantity of the registered face image matching the characteristic quantity of the face image in the arranging target image determined by the image processing unit.
According to the 21st aspect of the invention, in the image capturing device according to the 20th aspect, it is preferred that the first storage unit stores the characteristic quantity of the registered face image read from an external source.
According to the 22nd aspect of the invention, in the image capturing device according to the 20th aspect, it is preferred that: a registration image is also input at the input unit; the image processing unit also determines a characteristic quantity of a face image in the registration image input to the input unit; and the first storage unit stores the characteristic quantity of the face image determined by the image processing unit as the registered face image.
According to the 23rd aspect of the invention, an electronic image filing system comprises: a terminal device that includes a display unit, an image input unit and an attribute input unit, where a registration image containing a face image to be stored as a registered face image, a file image to be arranged and a search image containing a face image of a specific person are input at the image input unit; a face recognition device that includes a characteristic quantity detection unit that determines a characteristic quantity of a face image in each of the images having been input, a first storage unit at which characteristic quantities of face images in registration image are stored as registered face images and a face image search unit that detects a registered face image with a characteristic quantity matching a characteristic quantity of a face image in the file image determined by the characteristic quantity detection unit; an image filing device that includes a second storage unit containing storage areas each corresponding to one of the registered face images at which the file image is filed and stored at a specific storage area and attribute information corresponding to the registration image is stored and an image search unit that extracts a desired file image among file images stored in the storage areas; and a communication network that connects the various devices so as to enable information exchange among the devices, and: the terminal device transmits to the image filing device the registration image input at the image input unit and containing a face image to be stored as a registered face image, the file image input at the image input unit to be arranged and attribute information input at the attribute input unit, and displays at the display unit a detected image provided by the image filing device; the image filing device outputs the registration image and the file image received from the terminal device to the face recognition device, receives a code used to identify a registered face image from the face recognition device, stores the attribute information in the second storage unit in correlation to the code, stores the file image in the second storage unit in correlation to the code, extracts via the image search unit the file image correlated with the code and transmits the extracted file image to the terminal device; and the face recognition device stores the characteristic quantity of the face image in the registration image determined by the characteristic quantity detection unit in the first storage unit in correlation to an identification code indicating the face image, and outputs to the image filing device a code indicating a registered face image with a characteristic quantity matching the characteristic quantity of the face image in the file image determined by the characteristic quantity detection unit.
According to the 24th aspect of the invention, in the electronic image filing system according to the 23rd aspect, it is preferred that the file image is stored into the second storage unit in correlation to the code by storing the file image at the second storage unit in the storage area corresponding to the registered face image indicated by the code.
According to the 25th aspect of the invention, in the electronic image storage system according to the 23rd aspect, it is preferred that the face image is made to correspond to a specific storage area based upon the attribute information.
According to the 26th aspect of the invention, an electronic image filing system comprises: a face recognition device with a registration image containing a face image to be stored as a registered face image and a file image to be arranged input thereto, that includes a characteristic quantity detection unit that determines a characteristic quantity of a face image in each of the images, a first storage unit at which characteristic quantities are stored as registered face images and a face image search unit that detects a registered face image with a characteristic quantity matching a characteristic quantity of a face image in the file image determined by the characteristic quantity detection unit; an image filing device that includes a second storage unit containing storage areas each corresponding to one of the registered face images at which the file image is filed and stored at a specific storage area and attribute information corresponding to the registration image is stored and an image search unit that extracts a desired file image among file images stored in the storage areas; and a communication network that connects the face recognition device, the image filing device and a terminal device so as to enable information exchange among the face recognition device, the image filing device and the terminal device, and: the image filing device outputs the registration image and the file image received from the terminal device to the face recognition device, receives a code used to identify a registered face image from the face recognition device, stores the attribute information in the second storage unit in correlation to the code, stores the file image in the second storage unit in correlation to the code, extracts via the image search unit the file image correlated with the code and transmits the extracted file image to the terminal device; and the face recognition device stores the characteristic quantity of the face image in the registration image determined by the characteristic quantity detection unit in the first storage unit in correlation to an identification code indicating the face image and outputs to the image filing device a code indicating a registered face image with a characteristic quantity matching the characteristic quantity of the face image in the file image determined by the characteristic quantity detection unit.
According to the 27th aspect, a face recognition device with a registration image containing face images to be stored as registered face images and a file image to be arranged input thereto, comprises: a characteristic quantity detection unit that determines a characteristic quantity of a face image in each of the images; a storage unit at which characteristic quantities are stored as registered face images; anda face image search unit that detects a registered face image with a characteristic quantity matching a characteristic quantity of a face image in the file image determined by the characteristic quantity detection unit, and: the face recognition device is connected with a terminal device and an image filing device via a communication means so as to enable information exchange; and the face recognition device stores the characteristic quantity of the face image in the registration image determined by the characteristic quantity detection unit in the storage unit in correlation to an identification code indicating the face image and outputs to the image filing device a code indicating a registered face image with a characteristic quantity matching the characteristic quantity of the face image in the file image determined by the characteristic quantity detection unit.
According to the 28th aspect of the invention, an image filing device comprises a storage unit containing storage areas each corresponding to one of the registered face images, at which a file image is filed and stored at a specific storage area and attribute information corresponding to a registration image is stored, and: the image filing device is connected with a terminal device and a face recognition device via a communication means so as to enable communication exchange; and the image filing device outputs the registration image and the file image received from the terminal device to the face recognition device, receives a code used to identify a registered face image from the face recognition device, stores the attribute information in the storage unit in correlation to the code, stores the file image in the second storage unit in correlation to the code, extracts via the image search unit the file image correlated with the code and transmits the extracted file image to the terminal device.
According to the 29th aspect of the invention, an electronic image filing method comprises: a face image registration phase; and an image arranging phase, and: the face image registration phase comprises steps of inputting a registration image, determining a characteristic quantity for an object in the registration image, and storing the characteristic quantity as a registered image; and the image arranging phase comprises steps of inputting a file image, determining a characteristic quantity of an object in the file image, detecting a registered image with a characteristic quantity matching the characteristic quantity of the object in the file image having been determined, and correlating the file image with the registered image having been detected.
According to the 30th aspect of the invention, an electronic image filing method comprises steps of: extracting subject identification information from a registration image to be used to identify a subject; registering the subject identification information having been extracted; inputting a filing target image; extracting subject identification information from the filing target image to be used to identify a subject; making a decision as to whether or not the subject identification information extracted from the filing target information corresponds to the registered subject identification information; and filing the filing target image at a storage device in correlation to the registered subject identification information if the subject identification information extracted from the filing target image is judged to correspond to the registered subject identification information.
According to the 31st aspect of the invention, in the electronic image filing method according to the 30th aspect, it is preferred that: the subject is a person; the subject identification information to be used to identify the subj ect can be extracted from an image of the person's face; and the filing target image is filed at the storage device so as to be managed in correspondence to the person based upon the subject identification information.
According to the 32nd aspect of the invention, an electronic image filing device, comprises: an image input unit at which a registration image and a filing target image are input; a storage unit at which the filing target image having been input is filed; an identification information registration unit that extracts subject identification information to be used to identify a subject from the registration image having been input and registers the subject identification information; an identification information extraction unit that extracts from the filing target image having been input, subject identification information to be used to identify a subject; and a control unit that makes a decision as to whether or not the subject identification information extracted from the input filing target image corresponds to the registered subject identification information and files the input filing target information at the storage device in correlation to the registered subject identification information upon deciding that the subject identification information extracted from the input filing target image corresponds to the registered subject identification information.

### EFFECT OF THE INVENTION

The present invention adopting the structure described above achieves the following advantages.
Since electronic images are filed in correlation to the identification information or characteristic quantities used to identify subjects therein, the electronic images are automatically sorted and arranged in a desirable manner. Namely, the electronic images are sorted and arranged in an optimal manner without requiring a laborious operation. In particular, since each image is sorted based upon information extracted from the face image of the person photographed as the subject, electronic images are optimally arranged in units of individual persons captured in the electronic images.

### BRIEF DESCRIPTION OF THE DRAWINGS

FIG. 1 shows a block diagram of the structure adopted in a device achieved in an embodiment of the present invention.
FIG. 2 shows a flowchart of the processing executed in the device in FIG. 1.
FIG. 3 shows a flowchart of the processing executed in the image registration phase in the device in FIG. 1.
FIG. 4 shows a flowchart of the first part of the processing executed in the image arranging phase in the device in FIG. 1.
FIG. 5 shows a flowchart of the second part of the processing executed in the image arranging phase in the device in FIG. 1.
FIG. 6 shows a flowchart of the processing executed in the image search phase in the device in FIG. 1.
FIG. 7 shows a block diagram of the structure adopted in the system achieved in an embodiment of the present invention.
FIG. 8 shows a flowchart of the processing executed in the image registration phase in the system in FIG. 1.
FIG. 9 shows a flowchart of the first part of the processing executed in the image arranging phase in the system in FIG. 7.
FIG. 10 shows a flowchart of the second part of the processing executed in the image arranging phase in the system in FIG. 7.
FIG. 11 shows a flowchart of the processing executed in the image search phase in the system in FIG. 7.
FIG. 12 shows a registration image superimposed with frame marks.
FIG. 13 shows details of registered face images.
FIG. 14 shows a file image superimposed with frame marks.
FIG. 15 shows a file image superimposed with attribute information.
FIG. 16 shows different image file folders and images stored in individual folders.
FIG. 17 shows another file image.
FIG. 18 shows contents of attribute information for registered face images used in the system shown in FIG. 7.
FIG. 19 shows contents of registered face image information used in the system shown in FIG. 7.
FIG. 20 shows a configuration that may be adopted to provide the program to a computer.

### BEST MODE FOR CARRYING OUT THE INVENTION

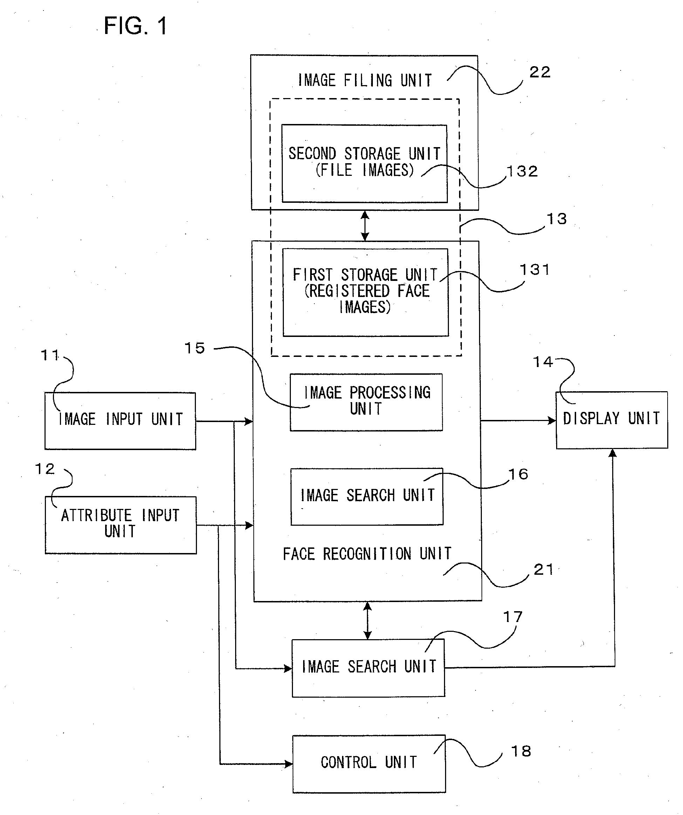

FIG. 1 is a block diagram schematically illustrating the structure adopted in the device according to the present invention. The device according to the present invention may be achieved by executing a specific program in a computer apparatus or a computer system.

Reference numeral 11 indicates an image input unit to which an image is input, constituted with a storage medium reading means, a data communication means for receiving data from an external device and the like. A registration image, a file image and a search image are input to the image input unit 11. Reference numeral 12 indicates an attribute input unit constituted with an input means such as a keyboard, through which an attribute of a person photographed in the registration image, e.g., the name of the person, is entered. Reference numeral 14 indicates a display unit at which an image is displayed.

Reference numeral 21 indicates a face recognition unit constituted with an image processing unit 15 and a first storage unit 131. The image processing unit 15 obtains a characteristic quantity corresponding to the face of a person photographed in the image input to the image input unit 11 by analyzing the image area over which the person's face is photographed (hereafter referred to as a face image) . At the first storage unit 131 constituted with a hard disk device, a magneto-optical storage device, a CD-R or the like, the face image in the registration image, the characteristic quantity corresponding to the face in the face image (hereafter simply referred to as the characteristic quantity of the face image) determined by the image processing unit 15 and the attribute related to the person are stored as a registered face image to be used as reference data in the face recognition processing which is to be detailed later. In addition, the image processing unit 15 compares the characteristic quantity of a face having been determined with characteristic quantities of face images stored in the first storage unit 131 and extracts the registered face image with a characteristic quantity matching the characteristic quantity of the face having been determined.

Reference numeral 22 indicates an image filing unit constituted with a second storage unit 132. At the second storage unit 132 constituted with a hard disk device, a magneto-optical storage device, a CD-R or the like, an image input to the image input unit 11 as a file image is filed and stored. The file image is filed and stored by sorting the file image correlated with an attribute of a person in the file image identified through the face recognition processing executed by the image processing unit 21 based upon a characteristic quantity corresponding to a face image in the file image and characteristic quantities of registered face images. It is to be noted that, as indicated by reference numeral 13 in FIG. 1, the first storage unit 131 and the second storage unit 132 usually constitute part of a single storage unit.

Reference numeral 17 indicates an image search unit that retrieves a desired image among file images at the image filing unit 22. The image search image 17 searches for the desired image based upon a search keyword input through the attribute input means 12 and attributes correlated to file images. It also engages the face recognition unit 21 to ascertain a characteristic quantity corresponding to a face image in a search image input to the input image unit 11 and to execute the face recognition processing to identify a person in the search image based upon the characteristic quantity having been ascertained and characteristic quantities of the registered face images, retrieves, based upon the results of the face recognition processing, a file image containing a person with attributes that correspond to the attributes of the person in the search image, and displays the retrieved file image at the display unit 14. Namely, the image search unit 17 either works in cooperation with the face recognition unit 21, or includes the face recognition unit 21 as part thereof.

Reference numeral 18 indicates a control unit connected to the individual units to control their operations.

Next, handling of images in the device according to the present invention is explained. Images are handled in the device according to the present invention in three different phases.

In a first phase, i.e., a face image registration phase, a face image of a person to be detected in an image input during a subsequent image arranging phase is stored as a registered face image into the first storage unit 131 together with attributes of the person. In the second phase, i.e., the image arranging phase, a face image of a person photographed in an input image is detected, a person matching a face image stored as a registered face image is recognized and the image is filed and stored as a file image in the second storage unit 132 in correlation to the attribute information for the recognized person. The attribute information is used as a search key during a subsequent image search phase. In the third phase, i.e., the image search phase, in response to an entry of search conditions, the file images at the second storage unit 132 are searched and an image matching the search conditions is retrieved.

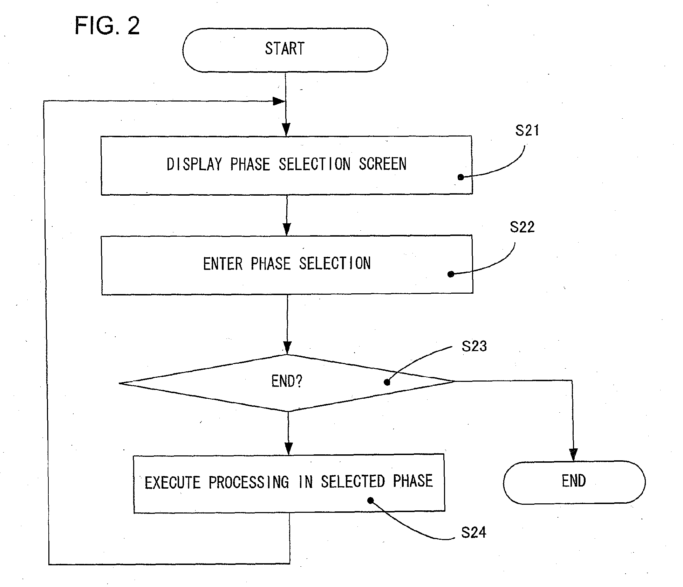

As the device according to the present invention is started up, processing is executed as shown in the flowchart presented in FIG. 2. Namely, in step 21 (indicated as S21 in the figure with the same notation format used for other steps), a screen that allows the user to select one of the three phases is brought up on display. The screen display also includes an option for ending the processing.

In step 22, a specific type of processing is selected via a mouse or the like. In step 23, a decision is made as to whether or not the processing end option has been selected. If the processing end option has been selected, the processing ends. Otherwise, the operation proceeds to step 24. In step 24, the processing in the selected phase is executed and the operation returns to step 21.

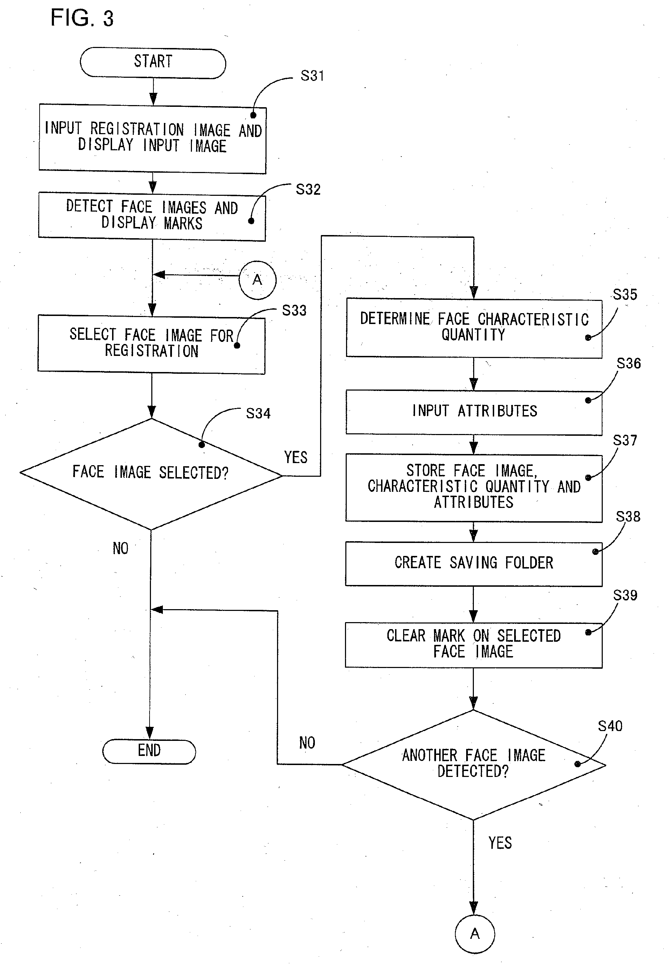

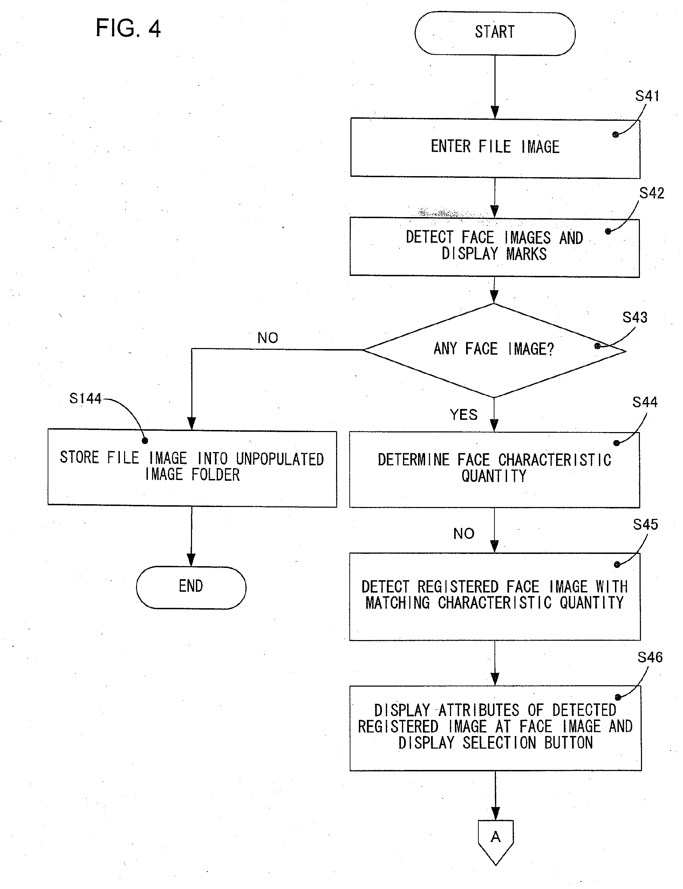

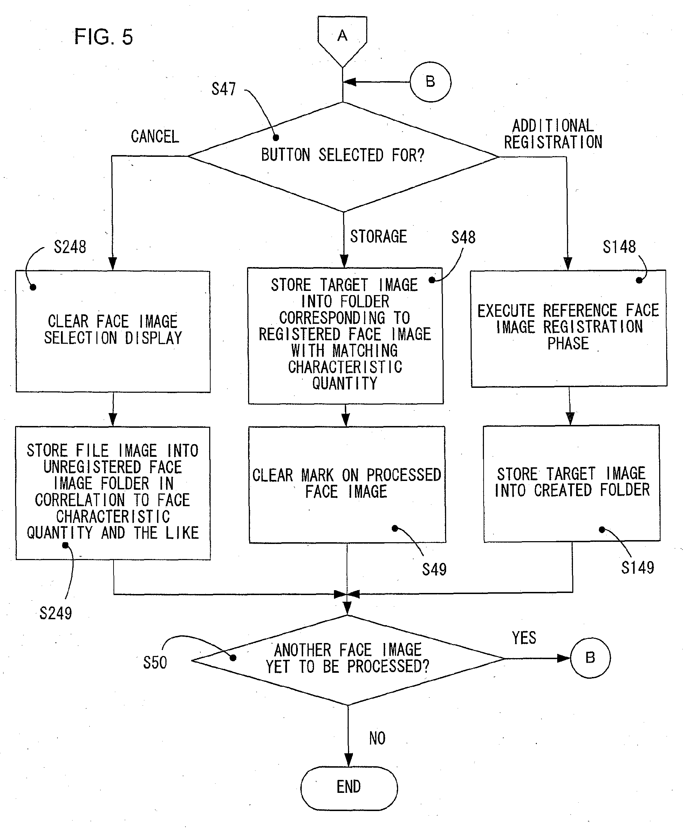

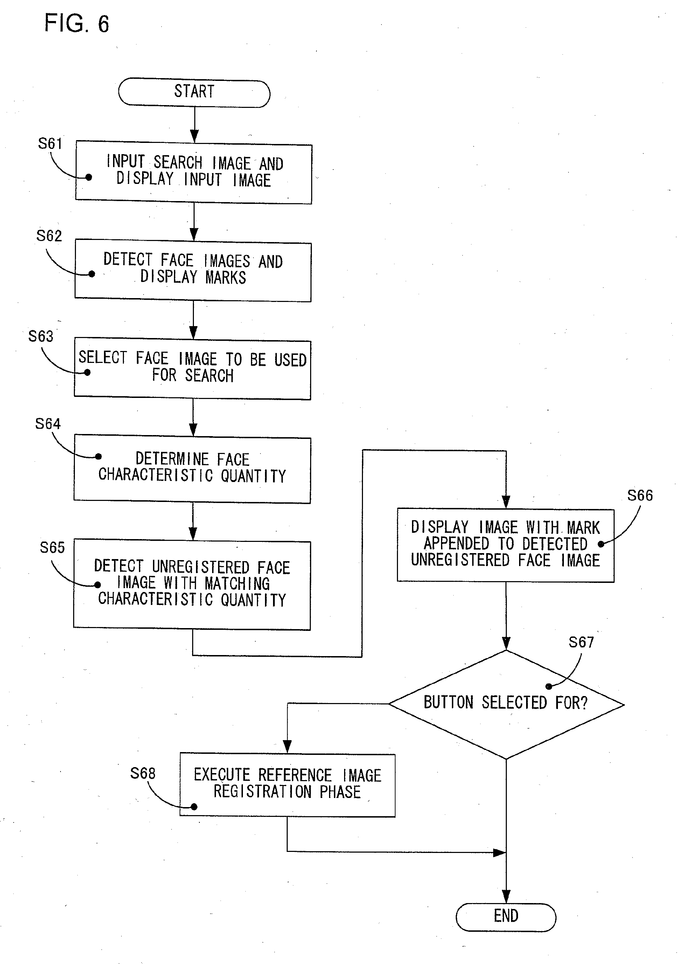

The following is a detailed explanation of each phase. FIG. 3 presents a flowchart of the face image registration phase processing, FIGS. 4 and 5 present a flowchart of the image arranging phase processing and FIG. 6 presents a flowchart of the image search phase processing.

In step 31 in the face image registration phase processing (see FIG. 3), an image containing a specific person's face therein is input as a registration image at the image input unit 11. The registration image having been input is then displayed at the display unit 14.

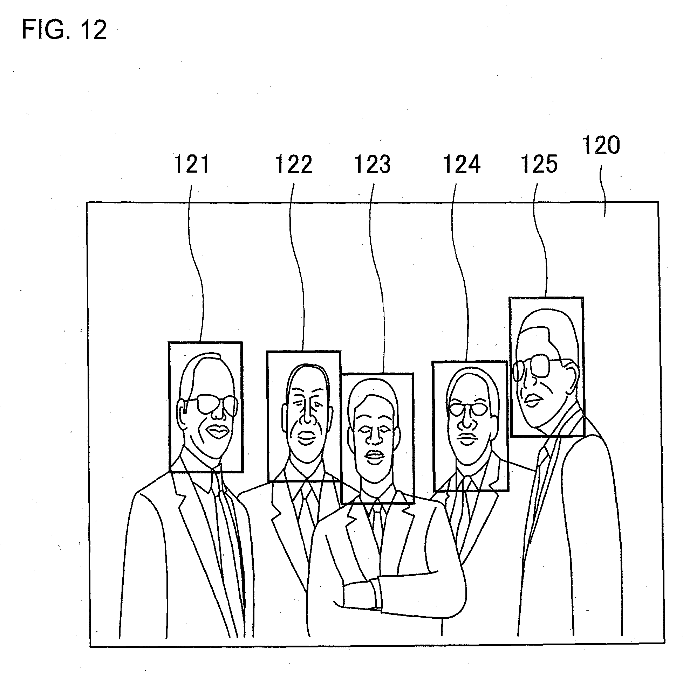

In step 32, the image processing unit 15 analyzes the registration image and either detects or extracts a face image of a person in the registration image. A mark such as a line frame is superimposed at the detected face image. If a plurality of face images is detected, the mark is superimposed at each face image. FIG. 12 shows line frame marks 121 to 125 superimposed in a registration image 120 having been input. If no face image is detected, error processing (not shown) is executed to indicate that no face image has been detected and then the processing ends.

In step 33, the face image of a given person among the face images with the superimposed marks is selected via an instruction device such as a mouse. At the display unit 14, a selection end button is displayed together with the image. The operation proceeds to step 34 after one of the face images is selected or the selection end button is selected. It is to be noted that if only one face image has been detected, the detected face image may be automatically selected and this step may be thus skipped.

In step 34, a decision is made as to whether or not a face image has been selected in step 33, and the operation proceeds to step 35 if a face image has been selected, whereas the processing ends if no face image has been selected. The absence of a selected face image indicates that the face images of all the persons that need to be registered have already been registered and there are no more face images to be registered or that all the unregistered face images are of persons who do not need to be registered.

In step 35, a characteristic quantity of the selected face image is determined (extracted) by the image processing unit 15. The characteristic quantity, which indicates the aspect ratio of the face shape, the relative positions of the eyes, the nose and the mouth, their positions relative to the face outline, their shapes, their sizes and the like, enables identification of the individual with a sufficiently high level of accuracy. Namely, the characteristic quantity of the face image constitutes information based upon which the specific person having been photographed can be identified. It is to be noted that the face image itself, too, is information that enables identification of the person. The processing executed to determine the characteristic quantity is similar to the processing executed in the system described in "PRIOR ART".

In step 36, attributes of the selected person are entered through the input unit 12. In step 37, the face image having been selected in the image is stored and registered as a registered face image at the first storage unit 131 in correlation with the characteristic quantity and the attributes.

In step 38, an image file folder is created. At this time, some of the attributes having been entered in step 36, e.g., the name of the person, is assigned as the folder name. The characteristic quantity of the face image may be used as the folder name.

In step 39, the mark superimposed at the selected face image is cleared. In step 40, a decision is made as to whether or not another face image has been detected and the operation returns to step 33 if it is decided that another face image has been detected, otherwise the processing ends.

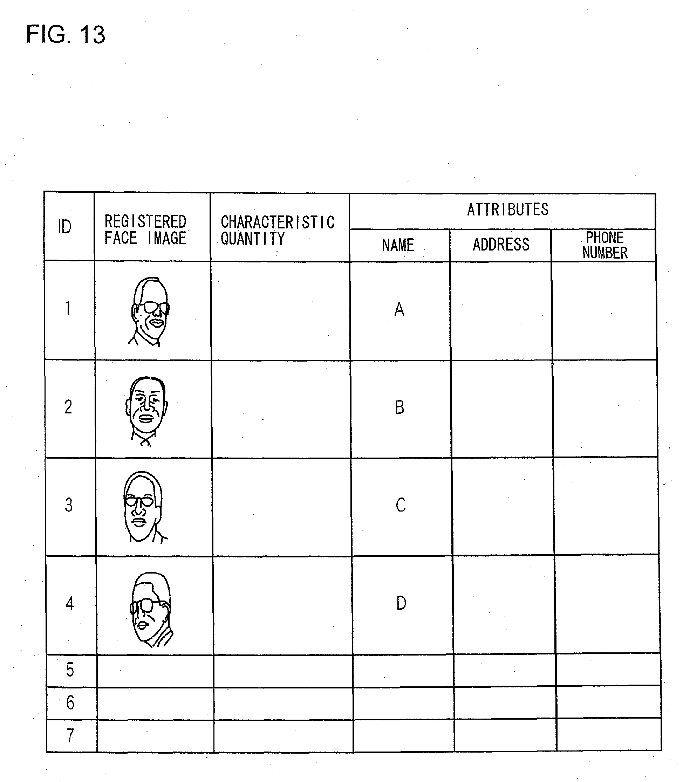

Face images to be stored (registered) as registered face images are thus stored into the first storage unit 131. FIG. 13 shows the details of face images in FIG. 12 except for the face image of the person superimposed with the line frame 123 that are stored as registered face images at the first storage unit 131. ID1, ID2, ID3 and ID4 respectively correspond to "Mr. A" with the mark 121 in FIG. 12, "Mr. B" with the mark 122 in FIG. 12, "Mr. C" with the mark 124 in FIG. 12 and "Mr. D" with the mark 125 in FIG. 12. The respective face image data extracted from the registration image 120 in FIG. 12 are stored as registered face images. Although not shown, data are entered at least in the characteristic quantity field. In this example, four image file folders assigned with folder names "Mr. A", "Mr. B", "Mr. C" and "Mr. D" have been created in step 38. In addition, an "unregistered face images" folder and an "unpopulated images" folder are created in advance.

The processing executed in the image arranging phase is now explained in reference to FIGS. 4 and 5. While the processing in FIGS. 4 and 5 is executed in a single sequence, the first half of the processing is shown in FIG. 4 and the second half of the processing is shown in FIG. 5 due to limited drawing space.

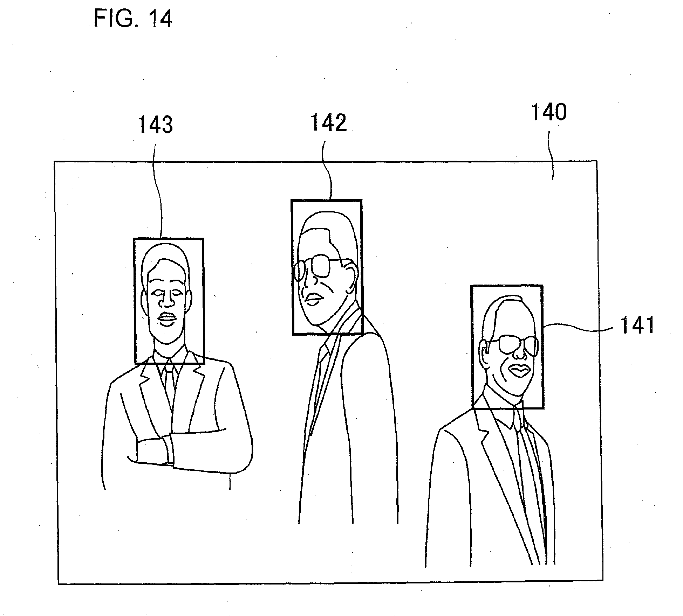

In step 41, a target image to be arranged or cataloged, i.e., a file image, is input from an external device such as a DSC. In step 42, the image processing unit 15 analyzes the file image and detects a face image in the file image. A mark such as a line frame is superimposed at the face image. If a plurality of face images are detected, the mark is superimposed at each of the face images. FIG. 14 shows line frame marks 141 through 143 superimposed at a file image 140.

In step 43, a decision is made as to whether or not there is any face image in the file image, i.e., whether or not there is any mark such as a line frame displayed (superimposed) at the image. The operation proceeds to step 44 if there is a mark in the file image, whereas the operation proceeds to step 144 if there is no mark. In step 144, the file image is stored into the unpopulated image folder created in advance for saving images in which there are no persons and the processing ends.

The image processing unit 15 processes the detected face image and determines the characteristic quantity of the face image. The processing executed to detect the characteristic quantity of the face image is identical to the processing executed in step 35 during the image registration phase.

In step 45, a registered face image matching the detected characteristic quantity is detected by referencing the characteristic quantities of the registered face images at the first storage unit 131. Then, in step 46, an attribute correlated to the registered face image having been detected, e.g., the person's name, is displayed near the face image having been processed as described above. The processing in steps 44 through 46 is executed for all the face images detected in the file image. If there is no registered face image matching the detected characteristic quantity, information indicating that the person corresponding to the face image has not been registered.

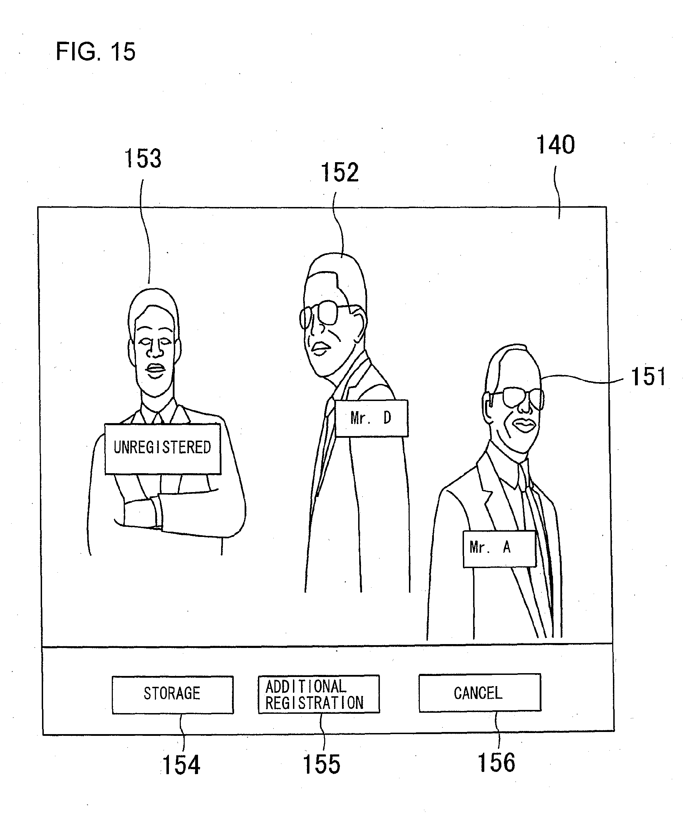

FIG. 15 shows the file image 140 that contains the attribute information mentioned above and information indicating that a person has not been registered yet. Face images 151 and 152, each having a match in one of the registered face images in FIG. 13, are superimposed with the respective attribute "Mr. A" and Mr. D", whereas a face image 153 with no matching registered face image is superimposed with "unregistered". Together with the file image, a storage button 154, an additional registration button 155 and a cancel button 156 are brought up on display. It is to be noted that in the following explanation, a face image for which a matching registered face image is detected is referred to as a detected face image and a face image with no matching registered face image is referred to as an unregistered face image.

In step 47, a decision is made as to whether or not any button among the storage button 154, the additional registration button 155 and the cancel button 156 has been selected via the instruction device such as a mouse. The operation proceeds to step 48 if the storage button 154 has been selected, the operation proceeds to step 148 if the additional registration button 155 has been selected and the operation proceeds to step 248 if the cancel button 156 has been selected. If a face image is selected via a mouse or the like before a specific button is selected, the face image having been selected alone undergoes the subsequent processing. It is to be noted that a plurality of face images can be selected to undergo subsequent processing.

In step 48, the file image is stored into the image file folder corresponding to the registered face image with the matching characteristic quantity. If there are a plurality of registered face images with matching characteristic quantities, i.e., if a plurality of persons whose face images are registered are photographed in the file image, the file image is stored into all the image file folders corresponding to the registered face images. In other words, the file image in FIG. 14 is stored into the folder "Mr. A" and the folder "Mr. D" in this particular example.

It is to be noted that correlating a file image with a specific image saving folder, correlating a file image with attribute information corresponding to a registered image with a matching characteristic quantity and attaching the attribute information to the image file of the file image are all part of "storing the file image into the image saving folder". If the characteristic quantity of the face image has been used as the folder name in step 38, the file image is made to correlate with the characteristic quantity. The characteristic quantity may be attached to the image file of the file image.

In step 49, the mark superimposed at the detected face image having undergone the processing in step 48 is cleared, and then the operation proceeds to step 50. If the name displayed for a detected face image is not correct, the correct name display for the detected face image is selected with the mouse before the storage button is selected. Thus, the file image is stored into an image file folder for the registered face image corresponding to the selected detected face image, i.e., corresponding to the detected face image with the correct name display. A detected face image that is not selected is designated as an unregistered face image. Any image having been designated as an unregistered face image is retained as an unregistered face image.

In step 148, the unregistered face image undergoes the processing in steps 33 through 40 in the face image registration phase. Namely, the unregistered face image is additionally registered as a registered face image. Then, an image file folder corresponding to the face image registered through this processing is created. However, the processing in step 35, which overlaps with the processing in step 44 in the image arranging phase, is not executed. Any unregistered face image that does not need to be newly registered is designated as canceling to undergo the processing in step 248 to be detailed later.

In step 149, the file image is stored into the image file folder having been created through the processing in step 148, and the mark superimposed at the unregistered face image having been processed in this step is cleared, before the operation proceeds to step 50. Any detected face image that has not been selected is retained after the processing in steps 148 and 149.

In step 248, the marks having been superimposed at the face images in step 42 and the names superimposed at the face images in step 46 are cleared. As a result, the marks or the name attached to any face image undergoing the processing in this step becomes cleared.

In step 249, the file image containing the unregistered face image having been put aside as canceling is correlated to the position information and the characteristic quantity for the unregistered face image and is stored into the unregistered face image folder, and then the operation proceeds to step 50. Assuming that the face image 153 is not selected for additional registration in step 148 and is designated as canceling in step 248 in the example described above, the image shown in FIG. 14 is also stored into the "unregistered face image" folder having been created in advance. If only a specific detected face image needs to undergo this processing, the face image to undergo the processing should be first selected via the mouse and then the cancel button 156 should be selected.

In step 50, a decision is made as to whether or not there is a face image that has not undergone any of the processing in step 48, the processing in step 148 and the processing in step 248 and, if it is decided that there is an unprocessed face image, the operation returns to step 47, whereas the processing ends if there is no face image left unprocessed.

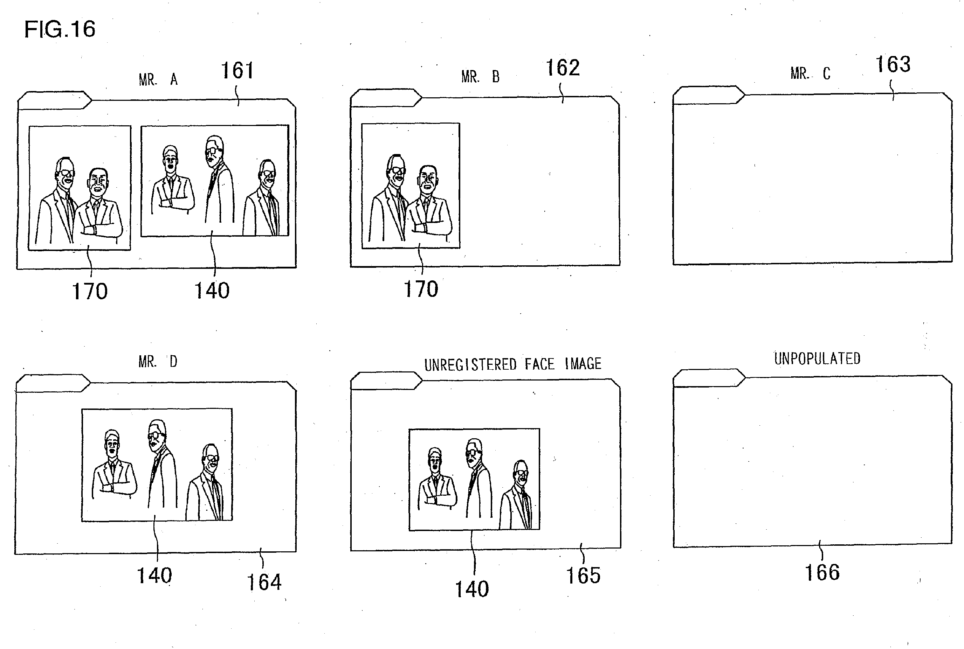

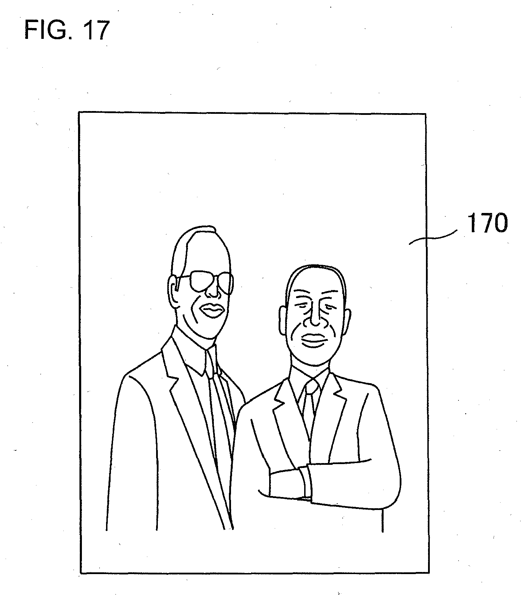

FIG. 16 shows images stored in the individual image file folders after an image 170 in FIG. 17 is arranged and filed through the processing described above. The image 140 in FIG. 14 and the image 170 in FIG. 17 are stored in the folder "Mr. A" 161, the image 170 in FIG. 17 is stored in the folder "Mr. B" 162, the image 140 in FIG. 14 is stored in the folder "Mr. D" 164, and the image 140 in FIG. 14 is stored in the folder "unregistered" 165. No image is stored in the folder "Mr. C" 163 and the folder "unpopulated images" 166.

If a file image contains both detected face images and unregistered face images, the storage button 154 should be selected in, for instance, step 47 to store the file image into the image file folders corresponding to the individual detected face images, the face image of a person to be registered as a registered face image among the unregistered face images should be selected via the mouse and then the additional registration button 155 should be selected to execute the required registration operation through the face image registration phase processing procedure explained earlier. Subsequently, the cancel button 156 should be selected to abort processing for the remaining unregistered face images.

After selecting with the mouse the face image of a person for whom the file image does not need to be stored into the image file folder or the face image of a person who does not need to be additionally registered, the cancel button 156 may be selected to exempt the face image from the processing, and then the storage button 154 or the additional registration button 155 may be selected. In other words, the storage button 154, the additional registration button 155 and the cancel button 156 may be selected in any order.

The characteristic quantities determined for face images of a single person may not always be exactly the same, depending upon the direction along which the face is turned or the facial expression. In addition, the characteristic quantity of the face may change slightly as the person ages. Accordingly, it is desirable that the characteristic quantity correlated to the registered face image be modified by using the characteristic quantity detected through the processing in step 45 or to further store the detected characteristic quantity in correlation to the registered image, concurrently as the processing in step 48 is executed. By updating the characteristic quantity in this manner, the registered face image corresponding to a face image in a file image can be detected even more accurately.

The characteristic quantity may be modified or the detected characteristic quantity may be additionally stored if there is a difference equal to or greater than a predetermined extent between the characteristic quantities of the two images. In addition, the photographing date/time at which each image, whether it is a registration image or a file image, is photographed is made to correlate to the image in the digital camera. Accordingly, the photographing date/time for the registration image and the photographing date/time for the file image may be compared and the characteristic quantity may be modified or the detected characteristic quantity may be additionally stored if there is a time difference equal to or greater than a predetermined number of days between these photographing dates.

In addition, if the attributes entered in step 36 in the face image registration phase are the same as the attributes having already been stored, a verification as to whether or not the characteristic quantity is to be updated may be made first and then the characteristic quantity having been stored may be modified or the detected characteristic quantity may be additionally stored.

Next, the image search phase is explained. In the image search phase, either of two different image search methods can be selected when extracting an image containing a specific person photographed therein from the file images at the second storage unit 132. In the first image search method, the search unit 17 extracts a matching image by searching the file images in reference to their folder names and image filenames as well as the attribute information correlated to them based upon a search keyword having been entered. This method is primarily adopted when a face image of the specific person is registered as a registered face image, i.e., when the attributes of the specific person are already known. The method is of the known art.

In the second method, an image containing a face image with a characteristic quantity that matches the characteristic quantity of the face image having been input is extracted. This search method is primarily adopted when a face image of the specific person is not registered. The following is an explanation of the second method, given in reference to FIG. 6 showing the processing procedure adopting the method.

In step 61, a search image containing a face image of a specific person photographed therein is input. In step 62, the image processing unit 15 analyzes the search image, detects any unregistered face image contained in the image and superimposes a mark such as a line frame over each detected face image. If a plurality of unregistered face images are detected, the mark is superimposed at each of the face images.

In step 63, a desired unregistered face image is selected via an instruction device such as a mouse. At the display unit 14, a selection end button is displayed together with the search image. The operation proceeds to step 64 when the selection end button is selected. If only one unregistered face image is detected, the detected face image may be automatically selected and this step may be thus skipped. Hereafter, the face image thus selected is referred to as a search face image.

In step 64, the image processing unit 15 determines the characteristic quantity for the search face image. In step 65, the image search unit 17 references the characteristic quantities of face images correlated to images in the unregistered face image folder and detects a characteristic quantity that seems to match the characteristic quantity of the search face image having been determined by the image processing unit 15. This processing may be executed by using a face image comparison function of the image processing unit 15, instead.

In step 66, the image correlated with the detected characteristic quantity, i.e. the image containing the face image with a characteristic quantity apparently matching the characteristic quantity of the search face image, is brought up on display at the display unit 14 and a mark is displayed at the position indicated by position information stored in correlation with the image. As a result, the mark is superimposed at the face image assumed to have the matching characteristic quantity. Together with the image, a start button to be selected to start a reference face image registration phase and the processing end button are brought up on display at the display unit 14.

In step 67, a decision is made as to whether or not either button has been selected and the operation proceeds to step 68 if the former button has been selected, whereas the operation ends if the latter button has been selected. In step 68, the face image registration phase processing is executed and then the processing ends.

Through this search method, an image of a specific person can be extracted with ease even when a face image of the person has not been registered. For instance, assuming that the image in FIG. 12 is the search image and the face image inside the line frame 123 is the search face image, the image in FIG. 14 is extracted from the folder "unregistered" in FIG. 16.

It is to be noted that by detecting all the face images in step 62 and searching through the image saving folders corresponding to the registered face images in step 65, an image of a specific person whose face image is registered, can be extracted even when the user cannot remember the person's attributes such as his name. If the characteristic quantity of the face image is used as the folder name in steps 38 and 48, an image stored in an image saving folder bearing a folder name made up of the characteristic quantity having been ascertained simply needs to be extracted in step 64.

In addition, by storing position information indicating the position of the face image corresponding to each folder in which the file image is stored in correlation with the particular file image when executing the processing in step 48, the attribute information such as the name of the person can be displayed near the face of the person corresponding to the search face image when displaying an image stored in the image saving folder. Such attribute information can be used as a reminder if the user forgets the name of the extraction target. In addition, by storing the positions and the attribute information corresponding to all the registered face images having been detected in correlation with the file image in step 48, the names of people other than the person corresponding to the search face image, too, can be brought up on display.

The method described above may be adopted in an image photographing device (or an image capturing device) as well as in an image filing device. The image photographing device adopting the method should include an image photographing means (or an image capturing means) as part of the image input unit, use an image photographed by the image photographing means as the arranging target image (file image) and use a storage medium as the second storage unit for recording the photographed image. In this case, as soon as an image is photographed, the photographed image can be sorted and recorded into the recording medium at the image photographing device in an optimal manner. It is to be noted that the image photographing device may obtain registered face images and the corresponding attribute information by reading and storing registered face images stored in the image filing device or may use photographed images as registration images.

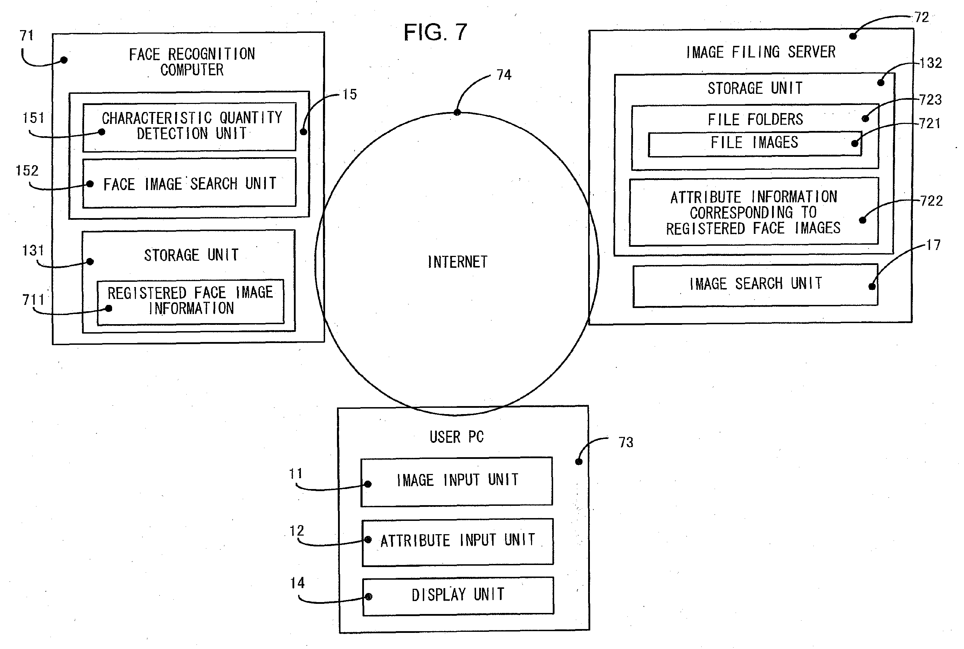

FIG. 7 presents an example of a system configuration that may be adopted when executing the processing in the various phases on a computer network. The same reference numerals are assigned to components with functions similar to those of the components in FIG. 1. The system includes a face recognition computer (hereafter referred to as a face recognition CPU) 71 that executes face recognition, an image filing server 72 at which images are filed and saved, a personal computer (PC) 73 used as a terminal device operated by a user and a communication means for connecting them such as the Internet 74. The image filing server may be, for instance, a server offering image holding services or the like, which may be provided by an Internet provider, an image print service provider or the like. The face recognition CPU 73 is a computer belonging to a face recognition service provider.

The face recognition CPU 71 comprises a characteristic quantity detection unit 151 that determines the characteristic quantity of a face image in an image having been input, a storage unit 131 in which registered face image information 711 indicating the characteristic quantities of registered face images and the like is stored and a face image search unit 152 that extracts a registered face image with a characteristic quantity matching the characteristic quantity detected by the characteristic quantity detection unit 151. The characteristic quantity detection unit 151 and a face image search unit 152 constitute the image processing unit 15 having been described in reference to the previous embodiment.

The image filing server 72 comprises a storage unit 132 at which file images 721 and attribute information, etc. 722 with regard to the persons corresponding to the registered face images are stored and the image search unit 17. The file images 721 are stored in image file folders 723.

The PC 73 is a PC conforming to standard specifications, which includes the display unit 14, a keyboard, a mouse and the like. A program for achieving the system is installed in the PC 73, and the program enables a storage medium reader unit or an external device connector unit such as a USB connector connected with an external storage device to function as the image input unit 11 and the keyboard to function as the attribute input unit 12. The keyboard is also used to enter other types of text information as well.

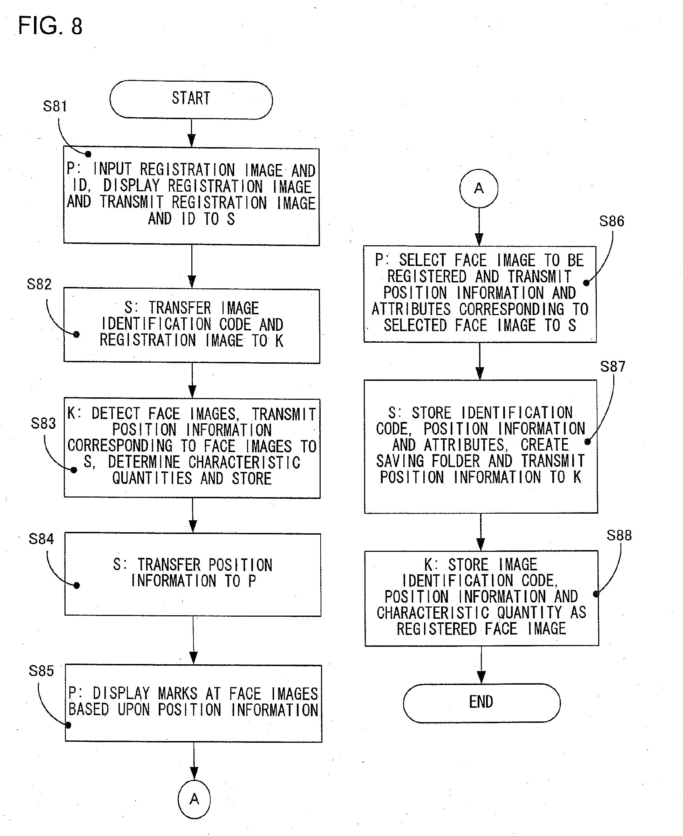

The following is an explanation of the processing executed in the individual phases, given by focusing on the features that differentiate the processing from that executed in the previous embodiment. The processing executed in each phase includes steps in which processing similar to that in the previous embodiment is executed and additional steps through which processing similar to that in the previous embodiment is executed by the face recognition CPU 71 and the image filing server 72 and the PC 73 through job sharing. It is to be noted that the letter added to the description of the processing executed in each step in FIGS. 8 through 11 indicates the computer that executes the particular step, with K indicating the face recognition CPU 71, S indicating the image filing server 72 and P indicating the PC 73.

The face image registration phase is now explained. In step 81 in FIG. 8, a registration image and an ID assigned to the particular user are entered via the image input unit 11 and the keyboard of the PC 73. The registration image having been input is displayed at the display unit 14. The registration image and the ID having been input are transmitted to the image filing server 72.

In step 82, the image filing server 72 identifies the user based upon the ID and user information (not shown) stored in advance in correspondence to the ID and certifies or authenticates the user. The image filing server also assigns an identification code and transfers the identification code and the registration image to the face recognition CPU 71. It is desirable that information that will enable identification of the user, such as the ID mentioned earlier, be included in the identification code.

In step 83, the face recognition CPU 71 detects any face images in the registration image, obtains position information indicating the positions of the face images in the registration image and transmits the position information together with the identification code to the image filing server 72. It also determines the characteristic quantities in correspondence to the individual faces by executing image analysis on the face images, and stores the characteristic quantities thus determined together with the identification code and the position information.

In step 84, the image filing server 72 transfers the identification code and the position information to the PC 73. In step 85, the PC 73 displays marks at the positions indicated by the position information. In other words, a mark is displayed at each face image in the registration image having been brought up on display at the PC 73.

In step 86, a face image to be registered is selected via the mouse at the PC 73 and the attributes of the person corresponding to the face image are entered in the attribute entry field brought up on display in response to the selection of the face image. A face image that does not need to be registered is not selected even though it is marked. The position information indicating the position of the selected face image and the corresponding attributes are transmitted together with the identification code to the image filing server 72.

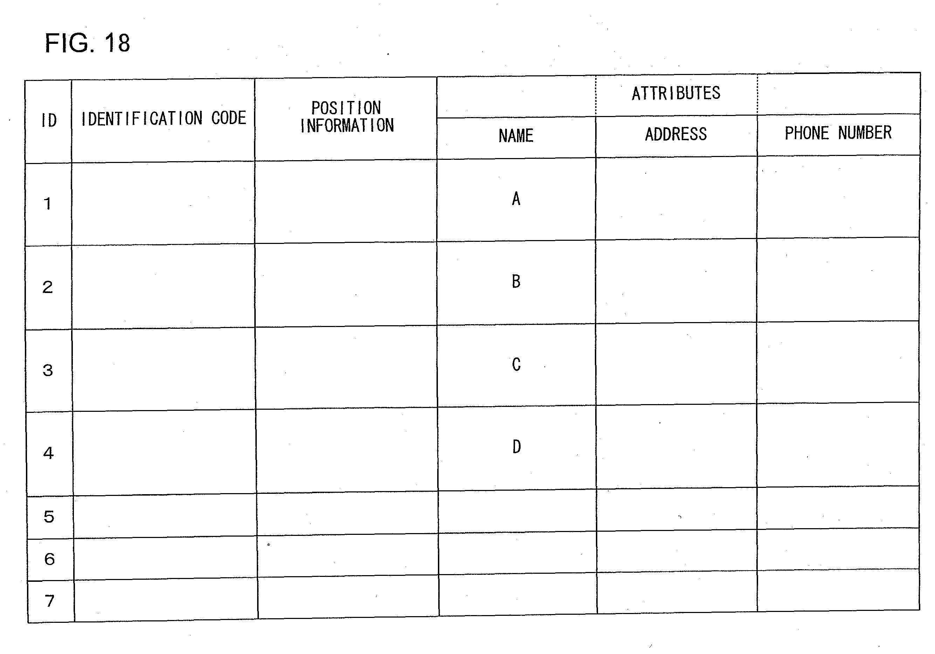

In step 87, the image filing server 72 stores the identification code, the position information and the attribute information having been received thereat into the storage unit 132 in correlation with one another. The storage contents in FIG. 18 include the attribute information, etc., 722 corresponding to the registered face images explained earlier. In addition, the image filing server 72 creates an image file folder 723 at the storage unit 132, bearing a folder name made up of, for instance, the person's name included in the attributes. It also transmits the identification code and the position information it has received to the face recognition CPU 71.

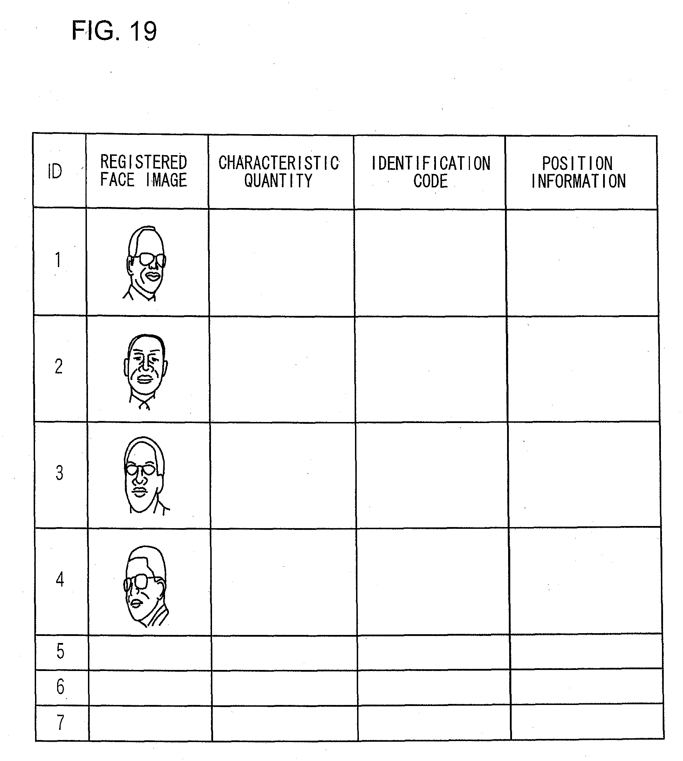

In step 88, the face recognition CPU 71 receives the identification code and the position information, and stores the identification code, the position information and the characteristic quantity of the face image present at the position indicated by the position information into the storage unit 131 as registered face image information 711. FIG. 19 shows the contents of the registered face image information 711 stored at the image recognition CPU 71. In the example presented in FIG. 19, the face images, too, are stored as part of the registered face image information. If the position of a face image present at a position is not indicated in the received position information, the corresponding characteristic quantity is discarded. It is to be noted that while ID numbers are assigned to the individual sets of information in FIGS. 18 and 19, such ID numbers do not constitute an essential part of the present invention. In addition, ID numbers assigned to the different types of information do not need to match, either.

The characteristic quantity detection in step 83 may be executed only for the face image, the position of which is indicated in the position information received in step 88. If there is no risk of misidentifying the image undergoing, for instance, continuous processing, the identification code transmission/reception may be skipped. While the attribute information on the persons corresponding to the registered face images may be stored at the face recognition CPU 71, it is more desirable from the viewpoint of personal information protection to store the attribute information at the image filing server 72, since the operator of the image filing server 72 selects the specific face recognition CPU 71 without the users being directly involved in the CPU selection.

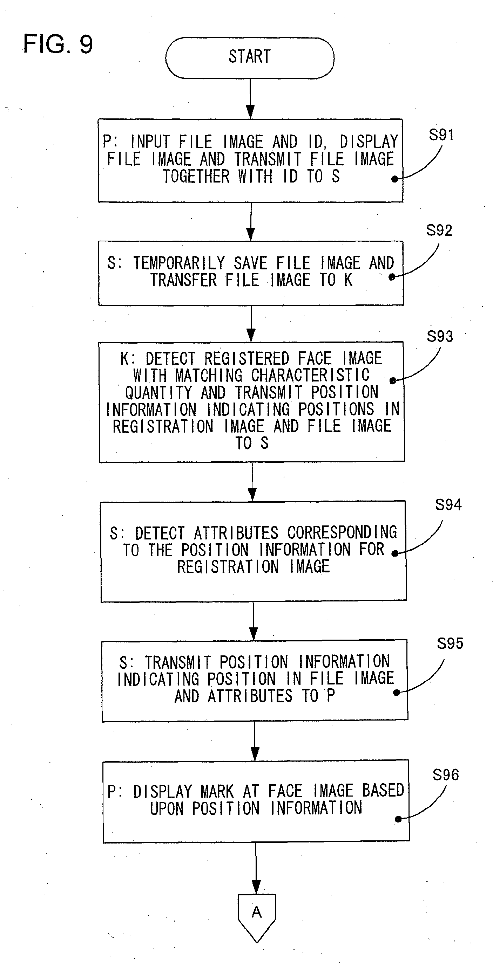

The image arranging phase is now explained. In step 91 in FIG. 9, a file image and the ID mentioned earlier are input at the PC 73. The PC 73 brings up the file image on display at the display unit 14 and transmits the file image and the ID having been input thereto to the image filing server 72. In step 92, the image filing server 72 identifies the user in correspondence to the ID, stores the file image into a temporary folder and also transfers the file image to the face recognition CPU 71.

In step 93, the face recognition CPU 71 detects face images in the file image, obtains position information indicating the positions of the face images in the file image and determines the characteristic quantities corresponding to the individual face images. It also references the registered face image information 711 and detects any face image among the registered face images at the storage unit 131 with a characteristic quantity matching a characteristic quantity having been determined. Then, in correspondence to each face image for which a registered face image with a matching characteristic quantity has been detected, the identification code of the registration image containing the face image, the position information indicating the position of the registered face image and the position information indicating the position of the face image detected in the file image are transmitted to the image filing server 72. In correspondence to each face image with no registered face image with a matching characteristic quantity having been detected, non-registration information indicating that a matching face image has not been registered and the position information indicating the position of the face image detected in the file image are transmitted to the image filing server 72. Alternatively, the fact that no registration image identification code or registered face image position information has been transmitted may constitute the non-registration information.

In step 94, the image filing server 72 references the attribute information 722 for the registered face images and detects the attributes correlated to the identification code and the position information. The attribute information 722 may be stored at the face recognition CPU 71 in correlation with the individual registered face images as part of the registered face information 711, and in such a case, the attribute information 711 corresponding to each registered face image having been detected in step 93, too, is transmitted to the image filing server 72, which eliminates the need to detect the attributes correlated to the identification code and the position information in step 94. However, from the viewpoint of protecting personal information related to the persons whose face images are registered, the attribute information 711 is stored at the image filing server 72 in the embodiment.

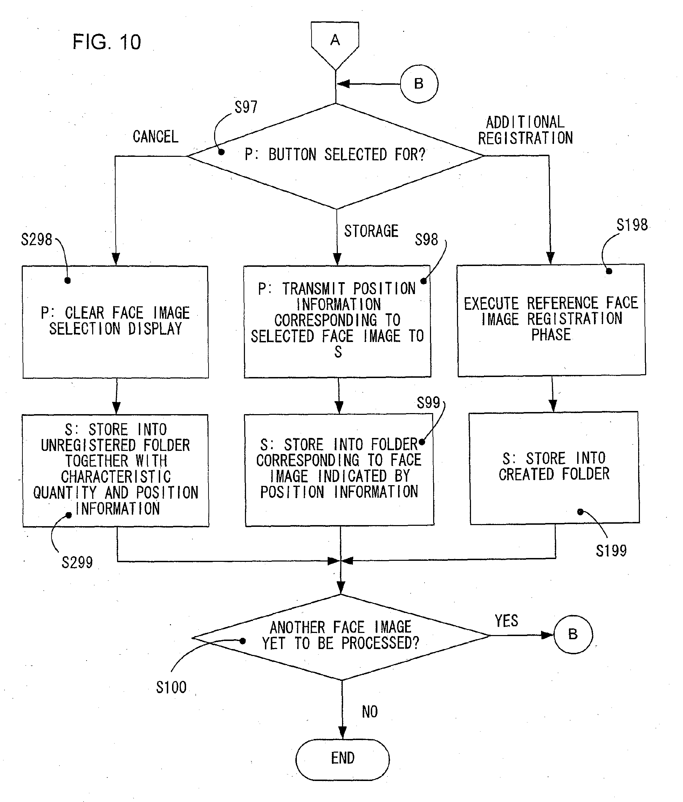

In step 95, the image filing server 72 transmits the position information indicating the portions of the face images having been detected in the file image, which has been provided by the face recognition CPU 71, to the PC 73 together with the attributes or the non-registration information. In step 96, the PC 73 displays the attributes or a non-registration mark indicating that a face image of the subject has not been registered at each position indicated by the received position information. As a result, the attributes or the non-registration marks are displayed at the face images in the file image having been brought up on display at the display unit 14. The subsequent processing is explained in reference to FIG. 10.

In step 97, a selection of a face image to undergo the subsequent processing is entered via the mouse at the PC 73. Namely, a storage button, an additional registration button and a cancel button are displayed together with the file image at the display unit 14, and the operation proceeds to step 98, step 198 or step 298 in response to the selection of one of these buttons.

In step 98, the PC 73 transmits the position information for the selected face image to the image filing server 72. In step 99, the image filing server 72 stores the file image into an image file folder 723 corresponding to the attributes of the face image present at the position indicated in the received position information, and then the operation proceeds to step 100.

In step 198, the face image registration phase explained earlier is executed. Through this processing, an image file folder 723 corresponding to the face image having become registered is created. In step 199, the file image is stored into the image file folder 723 having been created through the face image registration phase processing, before the operation proceeds to step 100.

In step 298, the PC 73 notifies the image filing server 72 that the cancel button has been selected and also clears the names and the non-registration marks having been displayed at the face images in step 96. As a result, all the names and registration marks corresponding to the face images undergoing the processing in this step are cleared. In step 299, the image filing server 72 correlates the processing target file image containing the unregistered face images to the position information and the characteristic quantity for each unregistered face image and stores the file image into the unregistered face image folder created in advance. Then, the operation proceeds to step 100. If only some of the detected face images need to undergo this processing, the face images to undergo the processing should be first selected with the mouse and then the cancel button should be selected.

In step 100, a decision is made as to whether or not there is still any face image that has not undergone any of the processing in step 98, the processing in step 198 and the processing in step 298, and the operation returns to step 97 if there is such a face image, and the processing ends if no such face image is left.

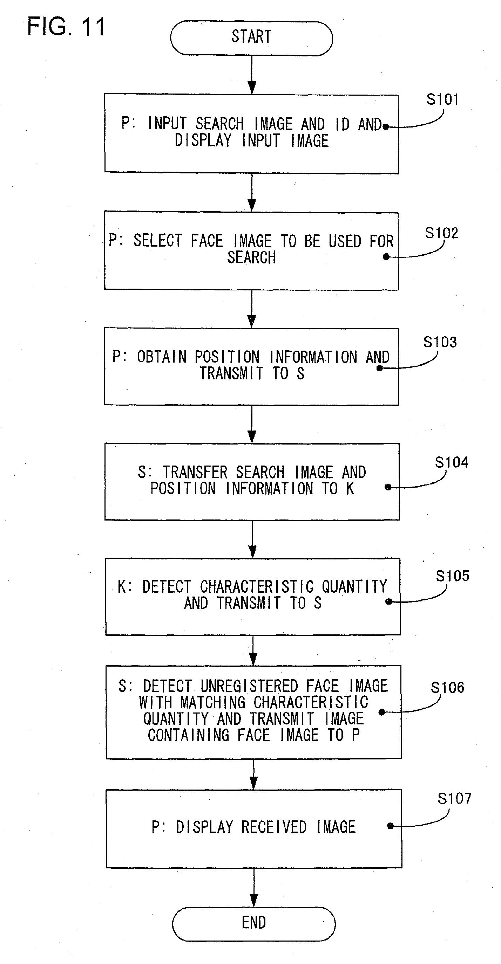

Next, the image search phase is explained. In the image search phase, a search for an image containing a person whose face image is registered at the storage unit 131 can be executed based upon a search keyword, or a search can be executed based upon the registered face image corresponding to a specific person contained in a search image having been input to extract a file image stored in the image file folder 723 corresponding to the subject with a registered face image as in the previous embodiment. In the latter search, the characteristic quantity of the face image of the specific person in the search image is determined, a registered face image with a characteristic quantity matching the characteristic quantity thus determined is detected and a file image stored in the image saving folder 723 corresponding to the attributes of the registered face image is extracted. In addition, a search can be executed based upon the face image of a specific person to extract an image in which the same person is photographed even if there is no registered face image corresponding to the person. The method adopted when executing this search is now explained in reference to FIG. 11.

In step 101, the PC 73 reads the user ID and the search image having photographed therein the face of the person to undergo the search, and also displays the search image at the display unit. In step 102, the PC 73 receives an instruction entered thereto to indicate the position of the face image of the person to undergo the search. Namely, the face image in the search image on display is clicked with the mouse.

In step 103, the PC 73 obtains position information indicating the position specified with the instruction and transmits the position information together with the ID to the image filing server 72. In step 104, the image filing server 72 identifies the user based upon the ID and transfers the search image and the position information to the face recognition CPU 71.

In step 105, the face recognition CPU 71 detects the face image present at the position indicated in the position information, determines the characteristic quantity of the face image and transfers the characteristic quantity to the image filing server 72. In step 106, the image filing server 72 engages the image search unit 17 to search for an image containing a face image with a characteristic quantity matching the received characteristic quantity by referencing the characteristic quantities of the face images correlated to the images in the unregistered face image folder and transmits the image obtained through the search to the PC 73.

In step 107, the PC 73 brings up the received image on display at the display unit. The face recognition CPU 71 and the image filing server 72 may be managed by different managers, as explained earlier, they may be managed by a single manager, or a single computer may function both as the face recognition CPU 71 and as the image filing server 72.

The system in this embodiment may be achieved through a tie-in between an Internet provider or a media operator and an image holding service site on the Internet, or it may be achieved by an Internet provider or a media operator by using the functions of an image holding service site on the Internet. Namely, the functions of the image filing server 72 and the image holding server may be partially integrated at either of them.

While an explanation is given above in reference to the embodiments on an example in which file images are sorted and filed based upon the face images of people photographed therein, file images may instead be sorted, filed and recorded in correspondence to different types of subjects, e.g., images of people, images without people, images of automobiles, images of trains, images of plants and images of animals. Furthermore, file images may be filed and recorded in correspondence to finer details of the subject types, e.g., in correspondence to specific models of automobiles and trains and specific types of flora and fauna.

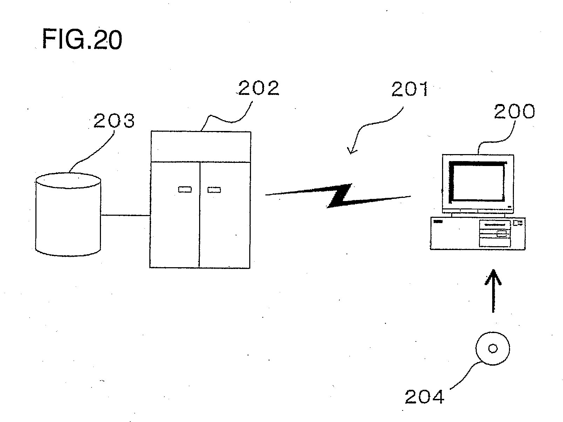

The processing described above is executed at a computer apparatus or a computer system in conformance to a specific program. Such a program may be provided in a recording medium such as a CD-ROM or through a data signal on the Internet or the like. FIG. 20 shows how the program may be provided in these formats. A computer 200 receives the program via a CD-ROM 204. The computer 200 is also capable of achieving a connection with a communication line 201. A computer 202 is a server computer that provides the program stored in a recording medium such as a hard disk 203. The communication line 201 may be a communication network such as the Internet or a telephone system, or it may be a dedicated communication line. The computer 202 reads out the program from the hard disk 203 and transmits the program to the computer 200 via the communication line 201. Namely, the program embodied as a data signal on a carrier wave is transmitted via the communication line 201. In other words, the program can be distributed as a computer-readable computer program product adopting any of various modes including a recording medium and a carrier wave.

The device achieved in the embodiment explained above achieves the following advantages. Since electronic images are filed in correlation with identification information enabling identification of subjects and characteristic quantities of the subjects, they can be automatically sorted and arranged in an optimal manner. Namely, electronic images obtained through image capturing operations can be sorted and arranged in a desirable manner without requiring any laborious operation. In particular, since they are sorted based upon information extracted from the images of the faces of the subjects, the electronic images can be optimally sorted in correspondence to the individual persons captured therein.

While the invention has been particularly shown and described with respect to preferred embodiments and variations thereof by referring to the attached drawings, the present invention is not limited to these examples and it will be understood by those skilled in the art that various changes in form and detail may be made therein without departing from the spirit, scope and teaching of the invention.

The disclosure of the following priority application is herein incorporated by reference: Japanese Patent Application No. 2003-334528 filed September 26, 2003

## Claims

1. An electronic image filing method, comprising:
a face image registration phase; and
an image arranging phase, wherein:
the face image registration phase comprises steps of:
inputting a registration image;
determining a characteristic quantity for a face in a face image contained in the registration image; and
storing the characteristic quantity as a registered face image, and
the image arranging phase comprises steps of:
inputting a arranging target image;
determining a characteristic quantity of a face in a face image in the arranging target image;
detecting a registered face image among registered face images with a characteristic quantity matching the characteristic quantity of the face in the arranging target image having been determined; and
correlating the arranging target image with the registered face image having been detected.

2. An electronic image filing method according to claim 1, wherein:
in the step of storing the characteristic quantity as a registered face image, the characteristic quantity and the face image in the registration image are stored as the registered face image.

3. An electronic image filing method according to claim 1 or claim 2, wherein:
in the step of correlating the arranging target image with the registered face image having been detected, the characteristic quantity of the detected registered face image is appended to the arranging target image.

4. An electronic image filing method according to claim 1 or claim 2, wherein:
the face image registration phase further comprises steps of
having attribute information related to a person corresponding to the registered face image input, and
storing the input attribute information in correlation with the registered face image.

5. An electronic image filing method according to claim 4, wherein:
in the step of correlating the arranging target image with the detected registered face image, the attribute information corresponding to the detected registered face image is appended to the arranging target image.

6. An electronic image filing method according to claim 1 or claim 2, wherein:
the face image registration phase further comprises a step of creating an image saving folder in correspondence to the registered face image; and
in the step of correlating the arranging target image with the detected registered face image, the arranging target image is stored into the image saving folder corresponding to the detected registered face image.

7. An electronic image filing method according to claim 6, wherein:
the face image registration phase further comprises a step of correlating the characteristic quantity of the registered face image with the image saving folder.

8. An electronic image filing method according to claim 6, wherein:
the face image registration phase further comprises steps of
having attribute information related to a person corresponding to the registered face image input, and
correlating at least part of the attribute information with the image saving folder.

9. An electronic image filing method according to claim 6, further comprising a step of:
storing the arranging target image into an unregistered face image folder prepared in advance if no registered face image with a characteristic quantity matching the characteristic quantity having been determined is detected among the registered face images.

10. An electronic image filing method according to any of claims 1 through 9, wherein:
the image arranging phase further comprises a step of obtaining position information indicating a position of a face in the arranging target image; and
in the step of storing the arranging target image in the image saving folder or in the unregistered face image folder, the position information indicating the position of the face having been obtained is stored in correlation to the arranging target image.

11. An electronic image filing method according to claim 6, further comprising a step of:
storing the arranging target image into a no-face image folder created in advance if no face image is detected in the arranging target image.

12. An electronic image filing method according to claim 1 or claim 2, further comprising:
an image search phase, wherein:
the image search phase comprises steps of:
inputting at an image input unit a search image containing a face image to be used for detection;
determining a characteristic quantity of the face image in the search image; and
detecting an image among arranging target images, which contains a face image with a characteristic quantity matching the characteristic quantity having been determined.

13. An electronic image filing method according to claim 12, further comprising a step of:
detecting an image containing a face image with a characteristic quantity matching the characteristic quantity having been determined in the unregistered face image folder.

14. An electronic image filing method according to claim 12 or claim 13, further comprising a step of:
displaying the detected image, wherein
a specific display is brought up in the displayed image at the position indicated in the position information.

15. A program that enables a computer to execute a method according to any of claims 1 through 14.

16. An electronic image filing device, comprising:
an image input unit;
a face recognition unit; and
an image filing unit, wherein:
a registration image and an arranging target image are input to the image input unit;
the face recognition unit includes an image processing unit that detects a face image contained in each of the images input to the image input unit and determines a characteristic quantity in correspondence to the face image and a first storage unit at which the face image and the corresponding characteristic quantity are stored in correlation with each other as a registered face image;
the image filing unit includes a second storage unit; and
the second storage unit contains an image file folder in which the arranging target image is stored, and stores the arranging target image in an image filing folder corresponding to a registered face image with a characteristic quantity matching the characteristic quantity of the face image in the arranging target image determined by the image processing unit.

17. An electronic image filing device according to claim 16, wherein:
the first storage unit and the second storage unit are integrated in a single storage unit.

18. An electronic image filing device according to claim 16, further comprising:
an image search unit, wherein:
a search image is also input to the image input unit; and
the image search unit extracts an arranging target image stored in an image file folder corresponding to a registered face image with a characteristic quantity matching a characteristic quantity of a face image in the search image determined by the image processing unit.

19. An electronic image filing device according to claim 16, further comprising:
an image search unit, wherein:
a search image is also input to the image input unit; and
the image search unit extracts an arranging target image in an unregistered face image folder, which contains a face image with a characteristic quantity matching a characteristic quantity of a face image in the search image determined by the image processing unit.

20. An image capturing device, comprising:
an image input unit that includes a photographing means;
a face recognition unit; and
a storage unit at which a registered face image and an arranging target image are stored, wherein:
an image photographed by the image photographing means is input as an arranging target image into the image input unit;
the storage unit includes a first storage unit at which a characteristic quantity of the registered face image is stored and a second storage at which the arranging target image is stored;
the face recognition unit includes an image processing unit that detects a face image in the arranging target image and determines a characteristic quantity of the face image and an image comparison unit that detects a registered face image with a characteristic quantity matching the characteristic quantity of the face image in the arranging target image determined by the image processing unit; and
the second storage unit stores the arranging target image in correlation to the characteristic quantity of the registered face image matching the characteristic quantity of the face image in the arranging target image determined by the image processing unit.

21. An image capturing device according to claim 20, wherein:
the first storage unit stores the characteristic quantity of the registered face image read from an external source.

22. An image capturing device according to claim 20, wherein:
a registration image is also input at the input unit;
the image processing unit also determines a characteristic quantity of a face image in the registration image input to the input unit; and
the first storage unit stores the characteristic quantity of the face image determined by the image processing unit as the registered face image.

23. An electronic image filing system, comprising:
a terminal device that includes a display unit, an image input unit and an attribute input unit, where a registration image containing a face image to be stored as a registered face image, a file image to be arranged and a search image containing a face image of a specific person are input at the image input unit;
a face recognition device that includes a characteristic quantity detection unit that determines a characteristic quantity of a face image in each of the images having been input, a first storage unit at which characteristic quantities of face images in registration image are stored as registered face images and a face image search unit that detects a registered face image with a characteristic quantity matching a characteristic quantity of a face image in the file image determined by the characteristic quantity detection unit;
an image filing device that includes a second storage unit containing storage areas each corresponding to one of the registered face images at which the file image is filed and stored at a specific storage area and attribute information corresponding to the registration image is stored and an image search unit that extracts a desired file image among file images stored in the storage areas; and
a communication network that connects the various devices so as to enable information exchange among the devices, wherein:
the terminal device transmits to the image filing device the registration image input at the image input unit and containing a face image to be stored as a registered face image, the file image input at the image input unit to be arranged and attribute information input at the attribute input unit, and displays at the display unit a detected image provided by the image filing device;
the image filing device outputs the registration image and the file image received from the terminal device to the face recognition device, receives a code used to identify a registered face image from the face recognition device, stores the attribute information in the second storage unit in correlation to the code, stores the file image in the second storage unit in correlation to the code, extracts via the image search unit the file image correlated with the code and transmits the extracted file image to the terminal device; and
the face recognition device stores the characteristic quantity of the face image in the registration image determined by the characteristic quantity detection unit in the first storage unit in correlation to an identification code indicating the face image, and outputs to the image filing device a code indicating a registered face image with a characteristic quantity matching the characteristic quantity of the face image in the file image determined by the characteristic quantity detection unit.

24. An electronic image filing system according to claim 23, wherein:
the file image is stored into the second storage unit in correlation to the code by storing the file image at the second storage unit in the storage area corresponding to the registered face image indicated by the code.

25. An electronic image storage system according to claim 23, wherein:
the face image is made to correspond to a specific storage area based upon the attribute information.

26. An electronic image filing system, comprising:
a face recognition device with a registration image containing a face image to be stored as a registered face image and a file image to be arranged input thereto, that includes a characteristic quantity detection unit that determines a characteristic quantity of a face image in each of the images, a first storage unit at which characteristic quantities are stored as registered face images and a face image search unit that detects a registered face image with a characteristic quantity matching a characteristic quantity of a face image in the file image determined by the characteristic quantity detection unit;
an image filing device that includes a second storage unit containing storage areas each corresponding to one of the registered face images at which the file image is filed and stored at a specific storage area and attribute information corresponding to the registration image is stored and an image search unit that extracts a desired file image among file images stored in the storage areas; and
a communication network that connects the face recognition device, the image filing device and a terminal device so as to enable information exchange among the face recognition device, the image filing device and the terminal device, wherein:
the image filing device outputs the registration image and the file image received from the terminal device to the face recognition device, receives a code used to identify a registered face image from the face recognition device, stores the attribute information in the second storage unit in correlation to the code, stores the file image in the second storage unit in correlation to the code, extracts via the image search unit the file image correlated with the code and transmits the extracted file image to the terminal device; and
the face recognition device stores the characteristic quantity of the face image in the registration image determined by the characteristic quantity detection unit in the first storage unit in correlation to an identification code indicating the face image and outputs to the image filing device a code indicating a registered face image with a characteristic quantity matching the characteristic quantity of the face image in the file image determined by the characteristic quantity detection unit.

27. A face recognition device with a registration image containing face images to be stored as registered face images and a file image to be arranged input thereto, comprising:
a characteristic quantity detection unit that determines a characteristic quantity of a face image in each of the images;
a storage unit at which characteristic quantities are stored as registered face images; and
a face image search unit that detects a registered face image with a characteristic quantity matching a characteristic quantity of a face image in the file image determined by the characteristic quantity detection unit, wherein:
the face recognition device is connected with a terminal device and an image filing device via a communication means so as to enable information exchange; and
the face recognition device stores the characteristic quantity of the face image in the registration image determined by the characteristic quantity detection unit in the storage unit in correlation to an identification code indicating the face image and outputs to the image filing device a code indicating a registered face image with a characteristic quantity matching the characteristic quantity of the face image in the file image determined by the characteristic quantity detection unit.

28. An image filing device, comprising:
a storage unit containing storage areas each corresponding to one of the registered face images, at which a file image is filed and stored at a specific storage area and attribute information corresponding to a registration image is stored, wherein:
the image filing device is connected with a terminal device and a face recognition device via a communication means so as to enable communication exchange; and
the image filing device outputs the registration image and the file image received from the terminal device to the face recognition device, receives a code used to identify a registered face image from the face recognition device, stores the attribute information in the storage unit in correlation to the code, stores the file image in the second storage unit in correlation to the code, extracts via the image search unit the file image correlated with the code and transmits the extracted file image to the terminal device.

29. An electronic image filing method comprising:
a face image registration phase; and
an image arranging phase, wherein:
the face image registration phase comprises steps of inputting a registration image,
determining a characteristic quantity for an object in the registration image, and
storing the characteristic quantity as a registered image; and
the image arranging phase comprises steps of
inputting a file image,
determining a characteristic quantity of an object in the file image,
detecting a registered image with a characteristic quantity matching the characteristic quantity of the object in the file image having been determined, and
correlating the file image with the registered image having been detected.

30. An electronic image filing method, comprising steps of:
extracting subject identification information from a registration image to be used to identify a subject;
registering the subject identification information having been extracted;
inputting a filing target image;
extracting subject identification information from the filing target image to be used to identify a subject;
making a decision as to whether or not the subject identification information extracted from the filing target information corresponds to the registered subject identification information; and
filing the filing target image at a storage device in correlation to the registered subject identification information if the subject identification information extracted from the filing target image is judged to correspond to the registered subject identification information.

31. An electronic image filing method according to claim 30, wherein:
the subject is a person;
the subject identification information to be used to identify the subject can be extracted from an image of the person's face; and
the filing target image is filed at the storage device so as to be managed in correspondence to the person based upon the subject identification information.

32. An electronic image filing device, comprising:
an image input unit at which a registration image and a filing target image are input;
a storage unit at which the filing target image having been input is filed;
an identification information registration unit that extracts subject identification information to be used to identify a subject from the registration image having been input and registers the subject identification information;
an identification information extraction unit that extracts from the filing target image having been input, subject identification information to be used to identify a subject; and
a control unit that makes a decision as to whether or not the subject identification information extracted from the input filing target image corresponds to the registered subject identification information and files the input filing target information at the storage device in correlation to the registered subject identification information upon deciding that the subject identification information extracted from the input filing target image corresponds to the registered subject identification information.
